# DEMANDE DE BREVET EUROPEEN

(11) **EP 3 357 342 A1**
(43) Date de publication de la demande: **08.08.2018**
(21) Numéro de dépôt: 18155100.3
(22) Date de dépôt: 05.02.2018
(51) Int. Cl.: A22C 17/08

(54) **DEPANNAGE DE JAMBON PAR VAPEUR SÈCHE**

(30) Priorité: 03.02.2017 FR 1750922
(71) Demandeur: Mecamatic, 01960 Peronnas (FR); Financiere Cros, 81320 Murat-sur-Vèbre (FR)
(72) Inventeur: CHEVELU, Jean-Marc, 01310 Buellas (FR); CROS, Yoann, 81320 Murat-sur-Vèbre (FR)
(74) Mandataire: Regimbeau

(57) **Abrégé**

L'invention concerne un procédé de dépannage d'un jambon (4) dont une couche de panne recouvre la partie charnue exposée, dans lequel un flux de vapeur sèche est projeté sur le jambon par des moyens de projection de vapeur sèche, ladite vapeur sèche étant essentiellement composée de molécules d'eau et ayant au niveau des moyens de projection une pression d'au moins 5 bars.

## Description

### DOMAINE TECHNIQUE DE L'INVENTION

La présente invention concerne le domaine agroalimentaire. Plus précisément, l'invention porte sur un procédé de dépannage de jambon par vapeur sèche.

Au cours de la fabrication d'un jambon cru, celui-ci est mis à sécher pendant une longue durée, de l'ordre de la plusieurs mois, voire jusqu'à vingt-quatre mois ou plus, ce qu'on appelle l'affinage. Alors que la majeure partie de la surface d'un jambon est recouverte de la peau et de la graisse de l'animal, qui protège le jambon, la partie haute du jambon, correspondant à l'attachement de la cuisse à la hanche de l'animal (attache fémorale), présente une surface exposée due au détachement du jambon, qu'on appelle la partie charnue exposée.

Au niveau de la partie charnue exposée, la viande n'est pas protégée par de la peau ou de la graisse, et risquerait de s'abîmer lors de l'affinage du jambon, formant une croute dure et sèche préjudiciable pour la consommation et le tranchage du jambon, ou pire, entraînant le pourrissement de la partie charnue ainsi exposée. En outre, les échanges de cette surface exposée avec le milieu environnant peuvent alors être trop importants et alors raccourcir la durée d'affinage. De plus, l'exposition à l'air libre de la viande sur la seule partie charnue exposée compromet l'homogénéité du séchage du jambon.

Il est donc courant de recouvrir la partie charnue exposée d'une panne qui va la protéger pendant l'affinage, ou du moins la fin de l'affinage si celui-ci est commencé sans panne. La panne est un mélange généralement composé de graisse, éventuellement de farine de riz, et de condiments et d'arômes, typiquement au moins du sel et du poivre. Cette panne forme une fine croûte sur la partie charnue exposée du jambon, et empêche la viande recouverte de se gâter. La panne permet également d'homogénéiser la dessiccation du jambon. Typiquement, la panne représente environ 150 grammes sur un jambon d'au moins 5 kg.

A l'issue de l'affinage, et avant la commercialisation des jambons, il est nécessaire de retirer cette panne. Traditionnellement, cette panne est retirée manuellement, en brossant la partie charnue exposée du jambon. Il s'agit toutefois d'une tâche longue et fastidieuse, qu'on a cherché à automatiser. Des brosses rotatives ont ainsi été employées pour dépanner mécaniquement les jambons. Néanmoins, l'utilisation de telles brosses engendre un étalement de la panne sur le jambon, et l'irrégularité de la surface d'une partie charnue exposée ne permet pas de retirer toute la panne. Par conséquent, il était encore nécessaire de finir manuellement le dépannage. Par ailleurs, l'utilisation de brosses sur différents jambons entraîne un risque accru de contamination de ces jambons, d'autant plus que des outils tels que des brosses sont difficiles à nettoyer parfaitement.

Une autre approche consiste à projeter de l'eau chaude sur les parties charnues exposées des jambons afin que la chaleur fasse fondre la panne, qui se retrouve alors dans l'eau de ruissellement. Cette approche présente deux inconvénients majeurs. Elle engendre une forte consommation d'eau, de l'ordre de plusieurs dizaines de litres par jambon, et la présence de la panne dans les effluents nécessite de retraiter ces volumes importants dans une station d'épuration. D'autre part, le jambon est humidifié par cette opération, et doit être séché pendant deux à trois jours. D'autres ont tenté d'obtenir la fonte de la panne en chauffant le jambon au moyen de panneaux rayonnants. Toutefois, cette opération cuit le jambon et le dénature.

### PRESENTATION DE L'INVENTION

L'invention a pour but de remédier au moins en partie à ces inconvénients et préférentiellement à tous, en permettant un procédé de dépannage de jambon qui assure que l'ensemble de la panne soit retirée, de façon sûre et propre, sans engendrer de grandes quantités d'effluents.

A cet effet, il est proposé un procédé de dépannage d'un jambon dont une couche de panne recouvre la partie charnue exposée, dans lequel un flux de vapeur sèche est projeté sur le jambon par des moyens de projection de vapeur sèche, ladite vapeur sèche étant essentiellement composée de molécules d'eau et ayant au niveau des moyens de projection une pression d'au moins 5 bars, remarquable en ce qu'un flux d'air comprimé est projeté sur le jambon par des moyens de projection d'air comprimé, le flux de vapeur sèche et le flux d'air comprimé étant projetés simultanément sur la panne du jambon.

Le procédé est avantageusement complété par les caractéristiques suivantes, prises seules ou en une quelconque de leur combinaison techniquement possible :
- la vapeur sèche a au niveau des moyens de projection de vapeur sèche une température d'au moins 150 °C ;
- le flux de vapeur sèche étant au-dessus du flux d'air comprimé ;
- le flux de vapeur sèche est déplacé sur le jambon, et le flux d'air comprimé suit le déplacement du flux de vapeur sèche ;
- le jambon comprend un jarret à une extrémité et une partie charnue exposée à l'autre extrémité, le jambon étant disposé avec le jarret en haut et la partie charnue exposée en bas, et le flux de vapeur sèche est déplacé à la surface du jambon du haut vers le bas ;
- l'orientation du flux de vapeur sèche est modifiée au cours du dépannage, le flux de vapeur sèche étant projeté d'abord en biais depuis le haut, puis en biais depuis le bas;
- le flux de vapeur sèche forme avec l'horizontal un angle compris entre 30° et 60° pendant la majeure partie de la projection sur le jambon.

L'invention concerne également un système de dépannage de jambon comprenant:
- des moyens de production de vapeur sèche,
- des moyens de projection de vapeur sèche,
- des moyens d'amenée de la vapeur sèche depuis les moyens de production de vapeur sèche jusqu'aux moyens de projection de vapeur sèche, remarquable en ce que le système comprend en outre :
   - des moyens de projection d'air comprimé,
   - des moyens de production d'air comprimé,
   - des moyens d'amenée de l'air comprimé depuis les moyens de production d'air comprimé jusqu'au moyens de projection d'air comprimé,
ledit système étant configuré pour projeter simultanément le flux de vapeur sèche et le flux d'air comprimé sur la panne du jambon, le système étant configuré pour mettre en oeuvre le procédé selon l'invention.

De préférence, le système comprend en outre des moyens de projection d'air comprimé, des moyens de production d'air comprimé et des moyens d'amenée de l'air comprimé depuis les moyens de production d'air comprimé jusqu'au moyens de projection d'air comprimé.

De préférence, le système comprend une rampe de projection comprenant une rampe de projection de vapeur sèche et une rampe de projection d'air comprimé. De préférence également, la rampe de projection d'air comprimé est en dessous de la rampe de projection de vapeur sèche.

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:
- la figure 1 est un diagramme de phase de l'eau montrant le domaine de la vapeur sèche utilisée dans l'invention;
- la figure 2 montre de façon schématique une vue d'ensemble d'un système de dépannage de jambon selon un mode de réalisation possible de l'invention;
- les figures 3 et 4 montrent de façon schématique des installations d'une zone de traitement d'un jambon d'un système de dépannage de jambon selon des modes de réalisation possible de l'invention.

### DESCRIPTION DETAILLEE

L'invention prévoit de projeter un jet de vapeur sèche sur le jambon par des moyens de projection de vapeur sèche pour retirer la couche de panne recouvrant la partie charnue exposée du jambon.

La vapeur sèche est de la vapeur dont la pression est supérieure à la pression de vapeur saturante. La pression de vapeur saturante d'un corps chimique est la pression à laquelle la vapeur est en équilibre thermodynamique avec son état condensé. On parle également de vapeur surchauffée puisque la vapeur est chauffée au-delà de son point de vaporisation. La vapeur sèche est essentiellement composée de molécules d'eau. Il s'agit donc de vapeur d'eau à une pression et une température correspondant, sur le diagramme de phase de l'eau, à un état de vapeur surchauffée.

De préférence, la vapeur sèche présente au niveau des moyens de projection une pression supérieure à 5 bars, de préférence une pression supérieure à 6 bars, et de préférence encore une pression d'au moins 7 bars. De façon similaire, la vapeur sèche a au niveau des moyens de projection une température d'au moins 150°C, et de préférence d'au moins 160°C, et de préférence encore d'au moins 170°C.

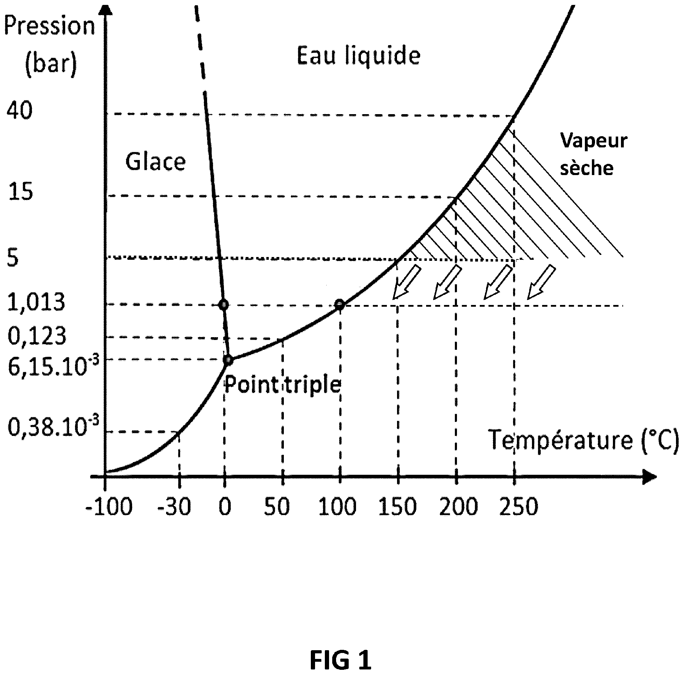

On a représenté sur la figure 1, qui montre de façon schématique le diagramme de phase de l'eau, le domaine correspondant à la vapeur sèche utilisée ici. Il s'agit ici du diagramme de phase de l'eau pure. Bien entendu, l'invention utilise de l'eau du robinet, mais le diagramme de phase de l'eau pure correspond à une bonne approximation du diagramme de phase de l'eau du robinet, car l'eau du robinet est essentiellement composée de molécules d'eau.

On a également représenté par des flèches la transition s'opérant en sortie des moyens de projection de vapeur sèche. En effet, à la sortie des moyens de projection de vapeur sèche, la pression devient celle de l'environnement ambiant, c'est-à-dire de l'atmosphère, qui tourne autour de 1013 hPa au niveau de la mer, et donc varie autour de cette valeur dans des conditions normales (typiquement entre 980 hPa et 1030 hPa), soit à peu près 1 bar (1000 hPa).

Lorsque la vapeur sèche sort des moyens de projection, la pression chute jusqu'à la pression atmosphérique. La température ne subit pas une telle chute. Par conséquent, la vapeur sèche se trouve alors, dans le diagramme de phase, encore plus éloignée de la courbe de changement d'état entre la phase liquide et la phase gazeuse (vapeur). Ainsi, malgré la détente de la vapeur en sortie des moyens de projection de vapeur sèche, elle reste de la vapeur sèche, éloignée du point de condensation de l'eau.

Dès lors, la vapeur sèche arrivant au contact du jambon à dépanner ne condense pas, où peu. Par conséquent, la vapeur sèche n'engendre pas d'humidification du jambon à dépanner. En outre, la vapeur sèche n'engendre pas ou peu d'effluents liquides. Ainsi seule la panne fondue est récupérée et doit être retraitée. Car en effet, l'utilisation de vapeur sèche permet une transmission calorifique efficace à la panne, puisque les molécules d'eau sont chaudes lorsqu'elles arrivent au contact de la panne. Ce transfert de chaleur permet de faire fondre la graisse de la panne.

Par ailleurs, il n'y a pas de contact entre la panne et un outil, ce qui empêche toute propagation d'une éventuelle contamination si un jambon devait être contaminé par des bactéries pathogènes. De plus, en raison de la température élevée de cette vapeur sèche, le flux de vapeur sèche est stérile et a une action désinfectante, qui permet d'éviter toute contamination bactériologique du jambon lors du dépannage.

La vapeur sèche permet donc de faire fondre la panne en limitant l'humidification du jambon. La pression de vapeur sèche au niveau des moyens de projection permet de projeter la vapeur sèche sur la panne, et donc de chasser la panne fondue par le jet de vapeur sèche. Toutefois, le jet de vapeur sèche peut ne pas être suffisant pour chasser la panne fondue.

Il est donc également prévu un flux d'air comprimé qui est projeté sur le jambon par des moyens de projection d'air comprimé, afin de chasser du jambon la panne fondue. De préférence, le flux de vapeur sèche et le flux d'air comprimé sont projetés simultanément sur la panne du jambon, le flux de vapeur sèche étant au-dessus du flux d'air comprimé.

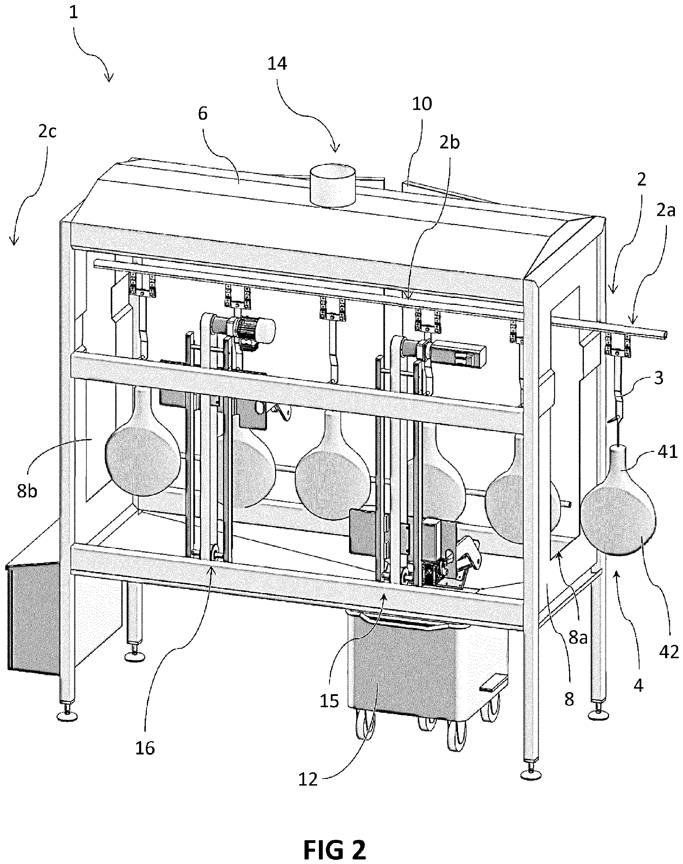

En référence à la figure 2, on a représenté un exemple de système 1 de dépannage de jambon. Le système comprend une chaîne de convoyage 2 sur laquelle sont suspendus les jambons 4. Les jambons 4 sont par exemple suspendus à la chaîne de convoyage au moyen d'une ficelle enserrant le jarret du jambon et formant une boucle, laquelle est passée sur un crochet de la chaîne de convoyage 2.

La chaîne de convoyage 2 comprend une partie amont 2a convoyant les jambons 4 à dépanner, une partie centrale 2b où s'effectue le dépannage des jambons 4, et une partie amont 2c convoyant les jambons 4 dépannés. La chaîne de convoyage 2 transporte donc les jambons 4 depuis la partie amont 2a jusqu'à la partie aval 2c. Bien sûr, tout ou partie de ce convoyage peut être manuel.

La chaîne de convoyage 2 amène donc les jambons 4 à un poste de traitement 6, dans lequel les jambons 4 sont dépannés. De préférence, le poste de traitement 6 est défini par des parois latérales 8 permettant de limiter les échanges avec l'extérieur, qui comportent cependant des ouvertures 8a, 8b permettant d'y faire transiter les jambons 4. Les ouvertures 8a, 8b du poste de traitement 6 peuvent présenter des portes d'isolement afin d'empêcher la vapeur et l'air de sortir du poste de traitement lors du traitement d'un jambon 4, s'ouvrant au passage d'un jambon 4 convoyé par la chaine de convoyage 2 et se refermant ensuite. Le convoyage se faisant pas-à-pas, cela revient à ouvrir les portes d'isolement lorsque la chaîne de convoyage 2 avance, et à les tenir fermer sinon. Le poste de traitement 6 peut comprendre des portes d'accès 10, de préférence transparentes, pour permettre à un opérateur de surveiller le dépannage des jambons 4 et éventuellement d'intervenir dans le poste de traitement 6, par exemple en cas de panne.

Des moyens de récupération de la panne fondue, comme par exemple le chariot 12 illustré sur la figure 2, sont prévus en-dessous du poste de traitement 6. Le fond du poste de traitement 6 peut présenter des plans inclinés 9 formant des pentes descendantes en direction d'un trou 11 formé dans ce fond, le chariot 12 étant disposé sous le trou 11. De préférence, le trou 11 est en-dessous de l'endroit où sont dépannés les jambons 4. Des moyens d'aspiration 14 de la vapeur sont prévus pour récupérer la vapeur dans le poste de traitement 6. Par exemple, une cheminée d'aspiration relie l'intérieur du poste de traitement à un dévésiculeur et à une pompe d'aspiration. La vapeur ayant servi à dépanner les jambons est aspirée dans la cheminée d'aspiration, et les gouttelettes d'eau sont retenues par le dévésiculeur. La pompe peut alors relâcher un air propre.

Le convoyage des jambons 4 au niveau du poste de traitement 6 se fait par la partie centrale 2b de la chaîne de convoyage 2. Le convoyage des jambons 4 au niveau du poste de traitement 6 est ici vertical, mais peut également se faire avec une composante verticale non nulle, dirigée vers le haut. La composante verticale du convoyage permet alors de faciliter la chute de la panne fondue sous l'action de la pesanteur. Ainsi, les jambons 4 sont convoyés en biais ou à la verticale, vers le haut, au niveau du poste de traitement 6. Dans ce cas, la direction de convoyage des jambons au niveau du poste de traitement 6 peut former, au moins par partie, un angle compris entre 30° et 60° par rapport à l'horizontal.

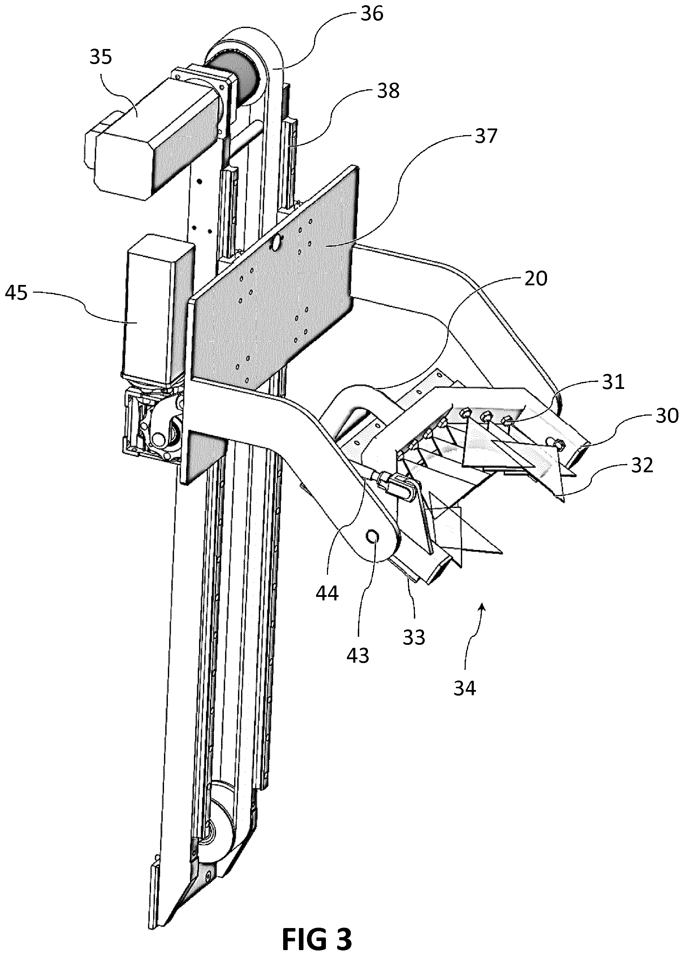

Dans le poste de traitement 6, les jambons 4 passent d'abord dans une zone de dépannage 15, où la panne est retirée, puis dans une zone de séchage 16. Une porte d'isolement peut être prévue dans le poste de traitement 6 entre la zone de dépannage 15 et la zone de séchage 16, fonctionnant de manière similaire aux portes d'isolement évoquées plus haut. La zone de séchage 16 sert à supprimer toute humidité résiduelle qui aurait pu se déposer sur les jambons 4 lors du dépannage. La zone de séchage 16 peut comprendre des moyens de soufflage d'un air chaud, par exemple à une température de 100°C avec un débit de 280 m³. Les moyens de soufflage d'air chaud comprennent des buses s'étendant selon plusieurs côtés du jambon 4 suspendu à la chaîne de convoyage 2. Les buses peuvent par exemple être organisées sur une rampe montée sur des moyens de déplacement motorisés qui permettent un déplacement vertical de la rampe pendant le séchage, afin de sécher le jambon 4 sur toute sa hauteur, et de préférence selon plusieurs orientations. La configuration de la zone de séchage peut ainsi être similaire à celle de la zone de dépannage 15 qui sera décrite plus loin, notamment en référence à la figure 3.

Le fond 9 du poste de traitement est adapté pour récupérer tout débris pouvant être détaché d'un jambon 4 lors de son passage en zone de séchage, comme par exemple de la panne fondue résiduelle, et l'inclinaison de ce fond 9 permet à ces débris d'atteindre le trou 11 et le chariot 12.

Les jambons 4 sont ensuite convoyés par la partie aval 2c de la chaîne de convoyage, pour être décrochés et manipulés pour les étapes ultérieures de leur commercialisation (emballage, découpage, etc.).

Le système de dépannage 1 comprend également des moyens de production de vapeur sèche (non représentés). Ces moyens de production de vapeur sèche comprennent une chaudière vapeur configurée pour générer de la vapeur d'eau et la surchauffer. La chaudière peut par exemple être électrique. La chaudière est capable de générer de la vapeur sèche à une pression supérieure à 5 bars, de préférence une pression supérieure à 6 bars, et de préférence encore une pression d'au moins 7 bars, et à une température d'au moins 150°C, et de préférence d'au moins 160°C, et de préférence encore d'au moins 170°C.

La chaudière est raccordée à une source d'alimentation en eau. De préférence, cette source d'alimentation en eau comprend une bâche alimentaire munie de moyens d'adoucissement de l'eau et éventuellement de préchauffage de l'eau.

De préférence, le système de dépannage 1 comprend également des moyens de production d'air comprimé (non représentés). Ceux-ci peuvent prendre des formes variées. Un compresseur peut par exemple être utilisé, un branchement à un circuit d'air comprimé, ou bien encore des bonbonnes d'air comprimé. De préférence, les moyens de production d'air comprimé sont capables de fournir un débit d'air comprimé d'au moins 100 m³/h, de préférence d'au moins 140 m³/h, avec une surpression d'au moins 0,65 bar, de préférence d'au moins 1 bar.

En référence à la figure 3, le dépannage du jambon 4 dans la zone de dépannage va être décrit plus en détail, ainsi que les moyens de projection de vapeur sèche. Les moyens de projection de vapeur sèche comprennent une rampe 30 de projection de vapeur sèche. La rampe 30 présente une conformation globalement en forme de U à l'intérieur duquel prend place le jambon 4. Sur la face intérieure de ce U se trouvent de multiples ouvertures formant buses de projection 31 pour la vapeur sèche. La vapeur sèche ainsi projetée est donc dirigée vers le centre du U. A des fins d'illustration, les jets de vapeur sèche en provenance des buses 31 sont sur la figure 3 matérialisé par des triangles 32. Les buses 31 sont de préférence conformées pour que les flux de vapeur sèche s'en échappant présentent une configuration plane, comme illustré sur la figure 3.

En dessous de la rampe 30 de projection de vapeur sèche se trouve une rampe 33 de projection d'air comprimé de forme similaire. Ainsi, le flux de vapeur sèche est au-dessus du flux d'air comprimé. Les directions respectives du flux de vapeur sèche et du flux d'air comprimé sont sensiblement parallèles. De préférence, le flux de vapeur sèche et le flux d'air comprimé sont projetés simultanément sur la panne du jambon 4. De fait, on désigne par la suite de rampe de projection 34 l'ensemble comprenant la rampe 30 de projection de vapeur sèche et éventuellement la rampe 33 de projection d'air comprimé. Toutefois, la rampe 33 de projection d'air comprimé est distincte de la rampe 30 de projection de vapeur sèche, en ce que les flux se composent différemment.

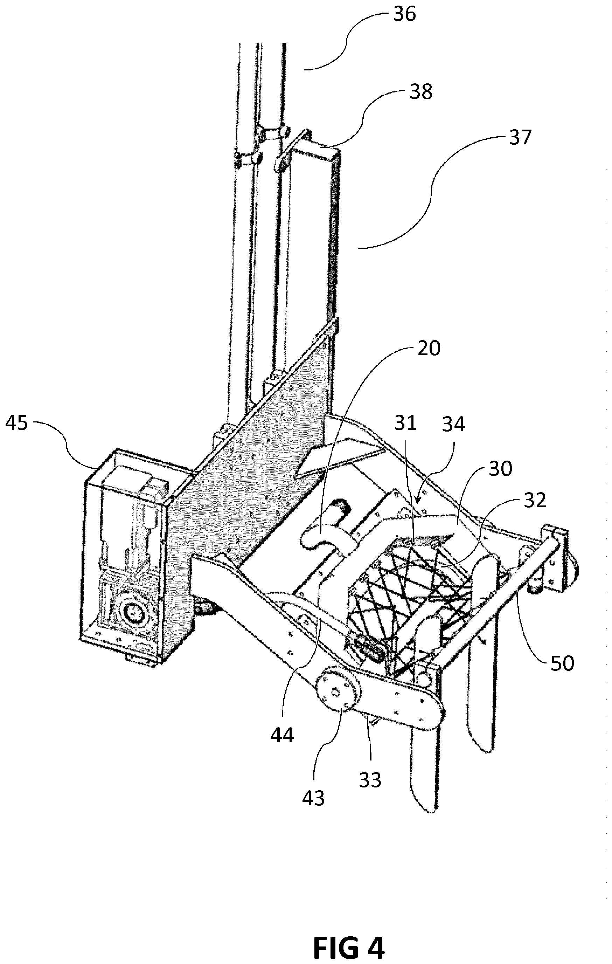

La projection de vapeur sèche et/ou d'air comprimé peut également se faire par des buses annexes disposées au niveau de la zone de dépannage 15, notamment sur un côté opposé à la rampe de projection 34 par rapport à la place du jambon 4. La figure 4 montre un exemple de moyens de projection comprenant, en plus des éléments de la figure 3, une rampe annexe 50 faisant face à la rampe de projection 34, de sorte que les buses de la rampe annexe projettent la vapeur sèche et/ou l'air comprimé sur une face du jambon 4 opposée à celle recevant les projections de la rampe de projection 34. De préférence, les buses de la rampe annexe 50 dirigent le flux de projection obliquement vers le bas.

La zone de séchage 16 peut par exemple comprendre des moyens de projection d'air chaud ayant une configuration similaire aux installations des figures 3 et 4, sans toutefois de moyens de projection de vapeur sèche, l'air chaud prenant la place de l'air comprimé dans les moyens de projection.

Les moyens de projection de vapeur sèche tels que la rampe 30 de projection de vapeur sèche sont alimentés en vapeur sèche par les moyens de production de vapeur sèche grâce à des moyens d'amenée de la vapeur sèche depuis les moyens de production de vapeur sèche jusqu'aux moyens de projection de vapeur sèche. Typiquement, il s'agit d'un tuyau 20 reliant la chaudière générant la vapeur sèche à la rampe 30 de projection de vapeur sèche. C'est au débouché des moyens d'amenée de la vapeur sèche que peut être mesurée la température et la pression de la vapeur sèche, voire à la sortie de la rampe 30 de projection de vapeur sèche.

De la même façon, les moyens de projection d'air comprimé tels que la rampe 33 de projection d'air comprimé sont alimentés en air comprimé par les moyens de production d'air comprimé grâce à des moyens d'amenée de l'air comprimé depuis les moyens de production d'air comprimé jusqu'aux moyens de projection d'air comprimé. Typiquement, il s'agit d'un tuyau 20 reliant le compresseur ou la bonbonne fournissant l'air comprimé à la rampe 33 de projection d'air comprimé. C'est au débouché des moyens d'amenée de l'air comprimé que peut être mesurée la température et la pression de l'air comprimé.

Le flux de vapeur sèche est déplacé sur le jambon 4, et le flux d'air comprimé suit le déplacement du flux de vapeur sèche. Un jambon comprend un jarret 41 à une extrémité et une partie charnue exposée 42 à l'autre extrémité. Le jambon 4 est disposé avec le jarret 41 en haut et la partie charnue exposée 42 en bas sur la chaîne de convoyage 2. Le flux de vapeur sèche est déplacé à la surface du jambon 4 du haut vers le bas, ainsi que le flux d'air comprimé, c'est-à-dire depuis le jarret 41 vers la partie charnue exposée 42. Le déplacement des flux est principalement causé par un mouvement vertical de la rampe de projection 34 par rapport à la chaîne de convoyage 2 auquel le jambon est suspendu. A cet effet, la rampe de projection 34 est prévue déplaçable grâce des moyens de déplacement verticaux.

Dans l'exemple illustré, les moyens de déplacement verticaux de la rampe de projection 34 comprennent un moteur 35 entraînant un organe de transmission 36 tel qu'une courroie ou une chaîne, relié à un support 37 portant la rampe de projection 34. Ce support 37 peut être monté mobile en translation sur des rails 38 s'étendant verticalement.

De préférence, la rampe de projection 34 est en outre mobile en rotation atour d'un axe horizontal, et des moyens de rotation de la rampe de projection 34 permettent de faire pivoter la rampe de projection 34 autour de l'axe horizontal. A cette fin, la rampe de projection 34 est montée sur un pivot 43 du support 37, et un actionneur 44 relie le moteur 45 à la rampe de projection 34 de sorte que l'action de l'actionneur 44 provoque une rotation de la rampe de projection 34 autour du pivot 43. Cette rotation permet de faire varier l'orientation du flux de vapeur sèche par rapport à l'horizontal, ainsi que par rapport au support 37, qui translate verticalement. De préférence, l'orientation du flux de vapeur sèche est modifiée au cours du dépannage d'un jambon 4, le flux de vapeur sèche étant projeté d'abord en biais depuis le haut, puis en biais depuis le bas.

Ainsi, au début du dépannage d'un jambon 4, le jambon 4, convoyé par la chaîne de convoyage 2, est d'abord engagé au niveau de son jarret 41 face à la rampe de projection 34, qui est inclinée de sorte à orienter les flux en biais, formant un angle compris entre 30° et 60° avec l'horizontal. Les moyens de déplacement verticaux de la rampe de projection 34 déplacent celle-ci vers le bas, de sorte que le flux se déplace, relativement au jambon 4, vers le bas de celui-ci, c'est-à-dire depuis le jarret 41 vers la partie charnue exposée 42. Pendant la majeure partie de la projection sur le jambon 4, le flux de vapeur sèche forme avec l'horizontal un angle compris entre 30° et 60°.

Lorsque le flux de vapeur sèche arrive au contact de la panne, la graisse composant la panne fond, et coule vers le bas. Le flux d'air comprimé permet de chasser la panne fondue. L'impact des flux sur le jambon 4 crée sur le jambon 4 un front de dépannage qui progresse vers le bas au fur et à mesure du déplacement des flux sur le jambon 4.

Lorsque la rampe de projection 34 arrive en bas du jambon 4, du côté de la partie charnue exposée 42 opposé au jarret 41, les moyens de rotation de la rampe de projection 34 font pivoter la rampe de projection 34 pour en changer l'inclinaison de sorte que le flux de vapeur sèche est orienté en biais depuis le bas vers le haut sur le jambon 4. De la sorte, la panne située sur la partie inférieure de la partie charnue exposée 42 du jambon 4 (à l'opposé du jarret 41) peut être retirée.

Une fois la panne retirée, le convoyage du jambon 4 lui fait quitter le poste de traitement 6, et l'amène à la zone de séchage 16 où le jambon 4 reçoit un flux d'air chaud par des moyens de soufflage d'un air chaud, qui peuvent, à l'instar des moyens de projection de vapeur sèche, être déplacés verticalement afin que le flux d'air chaud parcourt le jambon 4.

La rampe de projection 34 est ramenée dans sa position haute initiale par les moyens de déplacement verticaux et reprend son inclinaison initiale grâce aux moyens de rotation de la rampe de projection 34, avec un flux orienté en biais depuis le haut vers le bas.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de dépannage d'un jambon (4) dont une couche de panne recouvre la partie charnue exposée (42), dans lequel un flux de vapeur sèche est projeté sur le jambon (4) par des moyens de projection de vapeur sèche (30), ladite vapeur sèche étant essentiellement composée de molécules d'eau et ayant au niveau des moyens de projection une pression d'au moins 5 bars, **caractérisé en ce qu'**un flux d'air comprimé est projeté sur le jambon (4) par des moyens de projection d'air comprimé (33), le flux de vapeur sèche et le flux d'air comprimé étant projetés simultanément sur la panne du jambon.

2. Procédé selon la revendication 1, dans lequel la vapeur sèche a au niveau des moyens de projection de vapeur sèche (30) une température d'au moins 150 °C.

3. Procédé selon la revendication précédente, dans lequel le flux de vapeur sèche étant au-dessus du flux d'air comprimé.

4. Procédé selon la revendication précédente, dans lequel le flux de vapeur sèche est déplacé sur le jambon, et le flux d'air comprimé suit le déplacement du flux de vapeur sèche.

5. Procédé selon l'une des revendications précédentes, dans lequel le jambon comprend un jarret (41) à une extrémité et une partie charnue exposée (42) à l'autre extrémité, le jambon étant disposé avec le jarret en haut et la partie charnue exposée en bas, et le flux de vapeur sèche est déplacé à la surface du jambon du haut vers le bas.

6. Procédé selon la revendication précédente, dans lequel l'orientation du flux de vapeur sèche est modifiée au cours du dépannage, le flux de vapeur sèche étant projeté d'abord en biais depuis le haut, puis en biais depuis le bas.

7. Procédé selon la revendication précédente, dans lequel le flux de vapeur sèche forme avec l'horizontal un angle compris entre 30° et 60° pendant la majeure partie de la projection sur le jambon.

8. Système (1) de dépannage de jambon comprenant :
- des moyens de production de vapeur sèche,
- des moyens de projection de vapeur sèche (30),
- des moyens d'amenée (20) de la vapeur sèche depuis les moyens de production de vapeur sèche jusqu'aux moyens de projection de vapeur sèche, **caractérisé en ce que** le système comprend en outre :
- des moyens de projection d'air comprimé (33),
- des moyens de production d'air comprimé,
- des moyens d'amenée de l'air comprimé depuis les moyens de production d'air comprimé jusqu'au moyens de projection d'air comprimé (33),
ledit système étant configuré pour projeter simultanément le flux de vapeur sèche et le flux d'air comprimé sur la panne du jambon, ledit système étant configuré pour mettre en oeuvre le procédé selon l'une quelconque des revendications précédentes.

9. Système selon la revendication précédente, comprenant une rampe de projection (34) comprenant une rampe (30) de projection de vapeur sèche et une rampe (33) de projection d'air comprimé.

10. Système selon la revendication précédentes, dans lequel la rampe (33) de projection d'air comprimé est en dessous de la rampe (30) de projection de vapeur sèche.
